# EUROPEAN PATENT SPECIFICATION

(11) **EP 4 161 187 B1**
(45) Date of publication and mention of the grant of the patent: **06.11.2024**
(21) Application number: 20947962.5
(22) Date of filing: 07.08.2020
(51) Int. Cl.: H04W 72/566, H04L 67/12, H04L 67/60, H04W 72/1268, H04L 69/06, H04W 80/02, H04W 72/21, H04W 72/563, H04W 28/02

(54) **COMMUNICATION METHOD AND COMMUNICATION DEVICE**
KOMMUNIKATIONSVERFAHREN UND KOMMUNIKATIONSVORRICHTUNG
PROCÉDÉ DE COMMUNICATION ET DISPOSITIF DE COMMUNICATION

(43) Date of publication of application: 05.04.2023
(60) Divisional application: 24203335.5
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: RGTH
(86) International application number: PCT/CN2020/107990
(87) International publication number: WO 2022/027672

(56) References cited:
- EP-A1- 3 890 429
- EP-B1- 3 529 933
- CN-A- 108 024 285
- CN-A- 108 513 735
- CN-A- 108 811 117
- CN-A- 110 536 463
- CN-A- 111 031 599
- CN-A- 111 163 518
- CN-A- 111 294 936
- CN-A- 111 386 750
- CN-A- 111 435 860
- SAMSUNG: "TP for LCH-priority based Data-Data and SR-Data prioritization", vol. RAN WG2, no. Reno, USA; 20191118 - 20191122, 23 November 2019 (2019-11-23), XP051828998, Retrieved from the Internet <URL:https://ftp.3gpp.org/tsg_ran/WG2_RL2/TSGR2_108/Docs/R2-1916526.zip R2-1916526 LCH-priority based prioritization.doc> [retrieved on 20191123]
- SAMSUNG: "De-prioritization by Other Deprioritized Grants", 3GPP TSG-RAN WG2 MEETING #109BIS-E R2-2002945, 10 April 2020 (2020-04-10), XP051871100
- NOKIA ET AL.: "Stage-2 Updates for IIOT", 3GPP TSG-RAN WG2 MEETING #109BIS-E R2-2003170, 13 May 2020 (2020-05-13), XP051882787
- INTEL CORPORATION: "On Enhanced Inter-UE UL Multiplexing for eURLLC", 3GPP TSG RAN WG1 MEETING #95 R1-1812505, 10 August 2018 (2018-08-10), XP051478734
- NOKIA ET AL.: "LCH Mapping Restriction Issues with DC+CA PDCP Duplication", 3GPP TSG-RAN WG2 MEETING #111-E R2-2006917, 6 August 2020 (2020-08-06), XP051910878

## Description

### TECHNICAL FIELD

Embodiments of the present disclosure relate to a communication technology, and in particular, to a communication method, a terminal device and a network device.

### BACKGROUND

With the popularization of application scenarios of mobile communication systems, the requirements on communication delay and reliability are higher and higher. For example, in Industrial Internet of Things (IIoT), mobile communication systems need to support the services such as industrial automation, transmission automation, and smart power. Since the requirements corresponding to different types of services are different, it is inevitable that a plurality of instructions transmitted to a terminal device by a network side in sequence will conflict, or a plurality of resources used by a terminal device and granted by a network side will conflict, which will lead to resource waste or communication interruption because the terminal device cannot determine which instruction to follow, thereby affecting the communication quality. How to avoid the deterioration of communication quality due to the instruction conflict has become a problem to be solved by those skilled in the art. Related technologies are known from SAMSUNG: "TP for LCH-priority based Data-Data and SR-Data prioritization" 3GPP DRAFT· R2-1916526 and EP 3 890 429 which is a prior art according to Article 54(3) EPC and discloses method and apparatus for prioritization between uplink data and Scheduling Request in a wireless communication system.

### SUMMARY

The embodiments of the present disclosure provide a communication method and a communication device, which can reduce the deterioration of communication quality due to resource conflicts and improve the reliability of communication.

The invention is set out in the appended set of claims.

### BRIEF DESCRIPTION OF THE DRAWINGS

FIG. 1 illustrates a schematic diagram of a wireless communication system 100 applicable to an embodiment of the present disclosure.
FIG. 2 illustrates a schematic flowchart of a communication method provided by the present disclosure.
FIG. 3 illustrates another schematic flowchart of the communication method provided by the present disclosure.
FIG. 4 illustrates another schematic flowchart of the communication method provided by the present disclosure.
FIG. 5 illustrates another schematic flowchart of the communication method provided by the present disclosure.
FIG. 6 illustrates a schematic block diagram of an example of a communication device of the present disclosure.
FIG. 7 illustrates a schematic structural diagram of an example of a terminal device of the present disclosure.
FIG. 8 illustrates of a schematic structural diagram of an example of a network device of the present disclosure.

### DETAILED DESCRIPTION

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are part rather than all of the embodiments of the present disclosure.

The terms "first", "second", and the like in this specification, claims, and the abovementioned accompanying drawings in the embodiments of the present disclosure are used to distinguish similar objects instead of describing a specific order or sequence. It is to be understood that data used in such a way may be exchanged under appropriate conditions, such that the embodiments of the present disclosure described here can be implemented in a sequence other than sequences graphically illustrated or described here. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

The technical solutions of the embodiments of the present disclosure may be applied to various communication systems, for example: a Global System for Mobile communication (GSM) system, a Code Division Multiple Access (CDMA) system, a Wideband Code Division Multiple Access (WCDMA) system, a General Packet Radio Service (GPRS), a Long Term Evolution (LTE) system, a Frequency Division Duplex (FDD) system, a Time Division Duplex (TDD) system, a Universal Mobile Telecommunication System (UMTS), a Worldwide Interoperability for Microwave Access (WiMAX) communication system, a 5th Generation (5G) communication system, a New Radio (NR) access technology, a Vehicle-to-X (V2X) system, the Internet of Vehicles, a Machine Type Communication (MTC) system, and the Internet of Things (IoT). The V2X may include Vehicle to Network (V2N), Vehicle-to-Vehicle (V2V), Vehicle to Infrastructure (V2I), and Vehicle to Pedestrian (V2P).

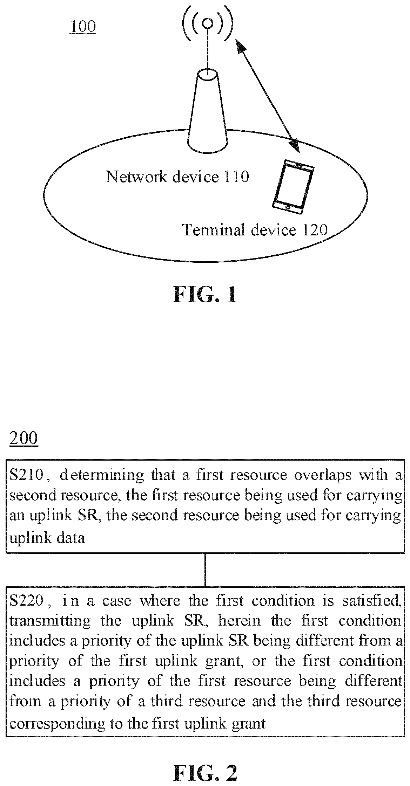

FIG. 1 illustrates a schematic diagram of a wireless communication system 100 applicable to an embodiment of the present disclosure.

As illustrated in FIG. 1, the wireless communication system 100 may include at least one network device, for example, the network device 110 as illustrated in FIG. 1. The wireless communication system 100 may further include at least one terminal device, for example, the terminal device 120 as illustrated in FIG. 1. The network device 110 may indicate a resource for transmitting an SR and a granted uplink resource to the terminal device 120. The terminal device 120 and the network device 110 may determine the information transmitted on an uplink resource according to the transmitting provided by the present disclosure, which is not limited thereto in the present disclosure.

The terminal device in the embodiments of the present disclosure may also be referred to as a User Equipment (UE), an access terminal, a user unit, a user station, a mobile station, a mobile radio station, a remote station, a remote terminal, a mobile device, a user terminal, a terminal, a wireless communication device, a user agent, or a user device. The terminal device in the embodiments of the present disclosure may be a mobile phone, a tablet computer (pad), a computer having wireless sending and receiving functions, a Virtual Reality (VR) terminal device, an Augmented Reality (AR) terminal device, a wireless terminal in industrial control, a wireless terminal in self driving, a wireless terminal in remote medical, a wireless terminal in a smart grid, a wireless terminal in transportation safety, a wireless terminal in a smart city, a wireless terminal in smart home, a cell phone, a cordless telephone, a Session Initiation Protocol (SIP) phone, a Wireless Local Loop (WLL) station, a Personal Digital Assistant (PDA), a hand-held device with a wireless communication function, a computing device, or other processing devices, on-board devices, or wearable devices connected to a wireless modem, a terminal device in a 5G network, a terminal device in a Public Land Mobile Network (PLMN) to be evolved in the future, and the like.

The wearable device, also referred to as a wearable intelligent device, is a generic term of wearable devices obtained by performing intelligent designing and development on daily wearing products, such as glasses, gloves, watches, clothes, and shoes. The wearable device is a portable device that is directly put on a human body or is integrated with clothes or ornaments of a user. The wearable device is not merely a hardware device, but further implements a powerful function through software support, data exchange, and cloud-based interaction. Generalized wearable intelligent devices include, for example, intelligent watches or intelligent glasses with complete functions and large sizes and capable of realizing all or part of functions independent of intelligent phones, and for example, various types of sign monitoring intelligent bands and intelligent jewelries of which each is dedicated to application functions of a certain type and required to be matched with other devices such as intelligent phones for use.

In addition, the terminal device may also be a terminal device in an Internet of things (IoT) system. The IoT is an important part of the development of information technology in the future. Its main technical feature is to connect things with a network through a communication technology, so as to realize the intelligent network of human-computer interconnection and thing-thing interconnection.

It is to be noted that no limits are made to specific forms of the terminal device in the present disclosure.

The network device in the embodiments of the present disclosure may be a device with a wireless transceiving function. The device includes, but is not limited to: an Evolved Node B (eNB), a Radio Network Controller (RNC), a Node B (NB), a Base Station Controller (BSC), a Base Transceiver Station (BTS), a Base Transceiver Station (BTS), a home base station (for example, home evolved nodeB, or home node B, HNB), a Baseband Unit (BBU), an Access Point (AP), a wireless relay node, a wireless return node, a Transmission Point (TP), or a Transmission and Reception Point (TRP) in a Wireless Fidelity (WIFI) system, or a gNB or TRP or TP in a 5G (such as NR) system, or one or a group of antenna plane (including a plurality of antenna planes) in a base station of the 5G system, or a network node forming the gNB or the TRP or TP, such as a BBU, or a Distributed Unit (DU).

In some deployments, the gNB may include a Centralized Unit (CU) and a DU. The gNB may also include an Active Antenna Unit (AAU). The CU realizes part functions of the gNB, and the DU realizes part functions of the gNB. For example, the CU is responsible for processing non-real-time protocols and services, and realizes the functions of Radio Resource Control (RRC) and Packet Data Convergence Protocol (PDCP) layers. The DU is responsible for processing PHY layer protocols and real-time services, and realizes the functions of a Radio Link Control (RLC) layer, a Media Access Control (MAC) layer, and a Physical (PHY) layer. The AAU realizes part PHY layer processing functions, and related functions of RF processing, and active antennae. Since the information of the RRC layer will eventually become the information of the PHY layer or is transformed from the information of the PHY layer, under this architecture, high-level signaling, such as RRC layer signaling, may also be considered to be transmitted by the DU, or transmitted by the DU+AAU. It is to be understood that the network device may be a device including one or more of a CU node, a DU node, and an AAU node. In addition, the CU may be divided into a network device in a Radio Access Network (RAN), or the CU may also be divided into a network device in a Core Network (CN). No limits are made thereto in the present disclosure.

The network device provides service for a cell, and the terminal device communicates with the cell through a transmission resource (for example, a frequency-domain resource or a spectrum resource) allocated by the network device. The cell may belong to a macro base station (such as a macro eNB or macro gNB), may also belong to a base station corresponding to a small cell. Here, the small cell may include: a metro cell, a micro cell, a pico cell, a femto cell, and the like. These small cells have the characteristics of small coverage and low transmitting power, and are suitable for providing high-rate data transmission services.

The terms "first", "second", and the like in this specification, claims, and the abovementioned accompanying drawings in the embodiments of the present disclosure are used to distinguish similar objects instead of describing a specific order or sequence. It will be appreciated that data used in such a way may be exchanged under appropriate conditions, such that the embodiments of the present disclosure described here can be implemented in a sequence other than sequences graphically illustrated or described here. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are part rather than all of the embodiments of the present disclosure.

FIG. 2 illustrates a schematic flowchart of a communication method provided by the present disclosure.

It is to be noted that the method is performed by a terminal device, and specifically, may be performed by a MAC entity of the terminal device, which is not limited thereto in the present disclosure.

At S210, the MAC entity of the terminal device determines that a first resource overlaps with a second resource. The first resource is used for carrying an uplink SR. The second resource is used for carrying uplink data.

When the terminal device has data to be transmitted and the SR needs to be transmitted to request an uplink resource from a network device, the MAC entity determines that a valid resource carrying the SR is a first resource. However, before S210, the network device grants the terminal device to transmit the uplink data on the second resource. For example, the first uplink grant is used for the network device to grant the terminal device to transmit the uplink data. The MAC entity of the terminal device determines that the first resource used for carrying the SR overlaps with the second resource used for carrying the uplink data.

At S220, in a case where the first condition is satisfied, the terminal device transmits the SR. The first condition includes the priority of the SR being different from the priority of the first uplink grant, or the first condition includes the priority of the first resource being different from the second resource, the second resource corresponding to the first uplink grant.

The first uplink grant is used for transmitting the uplink data. Optionally, the second resource corresponding to the first uplink grant may refer to that the second resource is the uplink resource that is allocated or granted by the network device for the terminal device and is used for transmitting the uplink data. The uplink resource may be understood as an uplink grant, that is, the first uplink grant. As an example rather than restriction, the second resource is a Physical Uplink Shared Channel (PUSCH) resource or an UpLink-Shared Channel (UL-SCH) resource.

The MAC entity of the terminal device determines whether the first condition is satisfied. In a case where the first condition is satisfied, the terminal device transmits the SR.

Optionally, in a case where it is determined that the first condition is satisfied, one or more of the following are performed:

considering the SR transmission as a prioritized SR transmission, or identifying the SR transmission as prioritized;

considering the first uplink grant as a de-prioritized uplink grant, or identifying the first uplink grant as de-prioritized;

considering the second resource as a de-prioritized uplink grant, or identifying the second resource as de-prioritized; or

determining that the priority of the first uplink grant is lower than the priority of the SR transmission. Optionally, the operation that the terminal device transmits the SR may include that the MAC entity of the terminal device transmits the SR to a PHY layer, or the MAC entity transmits indication information to the PHY layer. The indication information instructs the PHY layer to transmit the SR on the first resource, or the indication information instructs the PHY layer to transmit the SR on a valid resource.

Optionally, the SR is transmitted on the first resource after the PHY layer receives the SR from the MAC entity, or the SR is transmitted to the network device in a case where the PHY layer determines that the condition for transmitting the SR is satisfied.

As an example rather than restriction, the first resource is a Physical Uplink Control Channel (PUCCH).

Optionally, in a case where the priority of the SR is the same as the priority of the first uplink grant, the MAC entity performs one or more of the following:

considering the SR transmission as a de-prioritized SR transmission, the priority of the SR transmission being lower than the first data, the MAC entity not indicating the SR to the PHY layer, or the MAC entity not instructing the PHY layer to transmit the SR on the valid PUCCH resource.

The priority of the SR being the same as the priority of the first uplink grant includes one or more of the following.

The priority of a PHY layer of the SR is the same as the priority of a PHY layer of the first uplink grant.

The priority of a PHY layer of the first resource carrying the SR is the same as the priority of the PHY layer of the second resource carrying the first uplink grant.

That is to say, in a case where the first resource carrying the SR overlaps with the second resource carrying the first uplink grant, the MAC entity of the terminal device compares the priorities of the PHY layers of the first resource and the second resource. When the priorities of the PHY layers of the first resource and the second resource are the same, the SR transmission is considered as de-prioritized, or the SR is identified as de-prioritized.

Optionally, the priority of the uplink scheduling request being different from that of the first uplink grant, or the priority of the first resource being different from that of the second resource includes one or more of the following.

The priority of an LCH of the SR is higher than the priority of the LCH of the first uplink grant.

The priority of the LCH triggering the SR is higher than the priority of the LCH of the first uplink grant.

The priority of the LCH triggering the SR is higher than the priority of the first uplink grant.

That is to say, in a case where the first resource carrying the SR overlaps with the second resource carrying the first uplink grant, the MAC entity of the terminal device considers the priority of the LCH. The MAC entity takes the priority of the LCH of the SR or the priority of the LCH triggering the SR being higher than the priority of the LCH of the first uplink grant or the priority of the LCH of the SR being higher than the priority of the first uplink grant as one of the conditions for considering the SR as de-prioritized.

Optionally, the first condition further includes one or more of the following.

The priority of a PHY layer of the SR is different from the priority of the first PHY layer of the first uplink grant.

The priority of a PHY layer of the SR is higher than the priority of a PHY layer of the first uplink grant.

The priority of the PHY layer of the SR is different from the priority of a PHY layer of the first data.

The priority of the PHY layer of the SR is higher than the priority of a PHY layer of the first data.

The priority of the PHY layer of the first resource is different from the priority of the PHY layer of the first uplink grant.

The priority of the PHY layer of the first resource is higher than the priority of the PHY layer of the first uplink grant.

The SR can be transmitted by the PHY layer or a lower layer of an MAC layer.

It is determined, according to the priority of the PHY layer, that the SR can be transmitted by the PHY layer or the lower layer of the MAC layer.

It is determined, according to the priority of the PHY layer, that the SR can be transmitted.

The SR can be transmitted.

For example, in a case where the first resource overlaps with the second resource, the MAC entity compares the priority of the PHY layer of the SR and the priority of the PHY layer of the first uplink grant. In a case where the priority of the PHY layer of the SR is the same as the priority of the PHY layer of the first data, the MAC entity considers that the SR transmission is a de-prioritized SR transmission, and the SR is not transmitted to the physical layer. In a case where the priority of the PHY layer of the SR is different from the priority of the PHY layer of the first data, the MAC entity compares the priority of an LCH of the SR and the priority of the first uplink grant to determine whether to transmit the SR to a PHY layer. In a case where the priority of the LCH of the SR is higher than the priority of the first uplink grant, the MAC entity considers that the SR transmission is a prioritized SR transmission or identifies the SR transmission as prioritized, and transmits the SR to the PHY layer. Optionally, in a case where the priority of the LCH of the SR is lower than or equal to the priority of the first uplink grant, the MAC entity considers that the SR transmission is a de-prioritized SR transmission or identifies the SR transmission as de-prioritized, and the MAC entity considers that the first uplink grant is a prioritized uplink grant or identifies the first uplink grant as prioritized, and transmits the first data to the PHY layer, which is not limited thereto in the present disclosure.

Optionally, a terminal device receives first information and second information from a network device. The first information is used for configuring the priority of the PHY layer of the SR or the priority of the PHY layer of the first resource, and the second information is used for configuring the priority of the PHY layer of a first uplink scheduling grant.

As an example rather than restriction, the first information and/or the second information is an MAC Control Element (MAC CE) or a Radio Resource Control (RRC) message.

In a case where the abovementioned first condition and the second condition are satisfied simultaneously, the MAC entity of the terminal device considers that the SR is a prioritized SR or identifies the SR as prioritized, and transmits the SR to a PHY layer. According to the present invention, the second condition includes one or more of the following.

The MAC entity is configured with the priority of the LCH.

The first resource does not overlap with the resource granted by a second uplink grant.

In a non-claimed example, the second condition may further include the priority of the LCH triggering the SR is higher than the priority of the second resource.

For example, when the terminal device has an SR to be transmitted, if the MAC entity is configured with the priority of the LCH, the priority of the LCH may be written as lch-basedProritizition, the first resource (such as a PUCCH) used for carrying the SR transmission overlaps with the second resource (such as a UL-SCH), the priority of the LCH triggering the SR is higher than the priority of the uplink grant of the first resource, and the triggered SR can be transmitted by a lower layer of the MAC entity, then the MAC entity considers that the SR transmission is a prioritized SR transmission, and considers other uplink grants overlapping with the SR as de-prioritized.

As an example rather than restriction, the uplink data is an MAC PDU, a PUSCH, or a UL-SCH.

Exemplarily, the following related descriptions can be added to a communication standardization protocol.

"Conditions for SR and uplink grant are with different PHY priority, which can be either of the following:
1) The PHY priority of PUCCH for SR is different from the PHY priority of the uplink grant.
2) The pending SR triggered can be transmitted by lower layer.

As long as at least one SR is pending, the MAC entity shall for each pending SR:
1> For the SR configuration corresponding to the pending SR:
   2> when the MAC entity has an SR transmission occasion on the valid PUCCH resource for SR configured; and
      3> if the PUCCH resource for the SR transmission occasion overlaps with neither a UL-SCH resource nor an SL-SCH resource; or
      3> if the MAC entity is able to perform this SR transmission simultaneously with the transmission of the SL-SCH resource; or
      3> if the MAC entity is configured with Ich-basedPrioritization, and the PUCCH resource for the SR transmission occasion does not overlap with an uplink grant received in a Random Access Response nor with a transmission of MSGA payload, and the PUCCH resource for the SR transmission occasion for the pending SR triggered as specfied in clause 5.4.5 overlaps with any other UL-SCH resource(s), and the priority of the logical channel that triggered SR is higher than the priority of the uplink grant(s) for any UL-SCH resource(s) where the uplink grant was not already de-prioritized, and the priority of the uplink grant is determined as specified in clause 5.4.1, and <Condition3 for SR and uplink grant are with different PHY priority>; or
      3> if the PUCCH resource for the SR transmission occasion for the pending SR triggered as specfied in clause 5.22.1.5 overlaps with any UL-SCH resource(s) carrying a MAC PDU, and the priority of the triggered SR determined as specified in clause 5.22.1.5 is lower than sl-Prioritizationthres and the value of the highest priority of the logical channel(s) in the MAC PDU is higher than or eqaul to ul-Prioritizationthres, if configured; or
      3> if a SL-SCH resource overlaps with the PUCCH resource for the SR transmission occasion for the pending SR triggered as specfied in clause 5.4.5, and the MAC entity is not able to perform this SR transmission simultaneously with the transmission of the SL-SCH resource, and either transmission on the SL-SCH resource is not prioritized as described in clause 5.22.1.3.1 or the priority value of the logical channel that triggered SR is lower than ul-Prioritizationthres, if configured; or
      3> if a SL-SCH resource overlaps with the PUCCH resource for the SR transmission occasion for the pending SR triggered as specfied in clause 5.22.1.5, and the MAC entity is not able to perform this SR transmission simultaneously with the transmission of the SL-SCH resource, and the priority of the triggered SR determined as specified in clause 5.22.1.5 is higher than the priority of the MAC PDU determined as specified in clause 5.22.1.3.1 for the SL-SCH resource:
         4> consider the SR transmission as a prioritized SR transmission.
         4> consider the other overlapping uplink grant(s), if any, as a de-prioritized uplink grant(s);
            5> instruct the physical layer to signal the SR on one valid PUCCH resource for SR;
      3> else:
         4> consider the SR transmission as a de-prioritized SR transmission."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

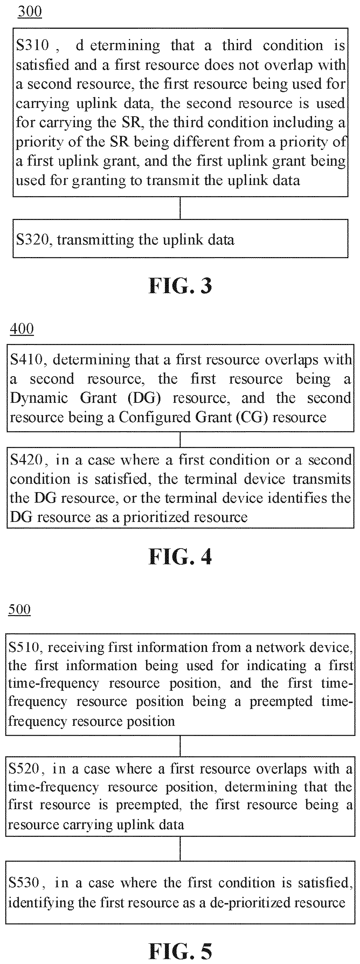

FIG. 3 illustrates another schematic flowchart of the communication method provided by the present disclosure.

It is to be noted that the method may be performed by a terminal device, and specifically, may be performed by a MAC of the terminal device, which is not limited thereto in the present disclosure.

At S310, the terminal device determines that the third condition is satisfied and the first resource does not overlap with the second resource. The first resource is used for carrying uplink data, and the second resource is used for carrying the SR. The third condition includes the priority of the SR being different from the priority of the first uplink grant. The uplink grant is used for transmitting the uplink data.

At S320, the terminal device transmits the uplink data.

The MAC entity of the terminal device determines that the third condition is satisfied at S310, and is configured to transmit the uplink data at S320 in a case where the first resource used for carrying the uplink data does not overlap with the second resource used for carrying the SR.

The third condition includes the priority of the SR being different from the priority of the first uplink grant. That is to say, in a case where the terminal device determines that the first resource used for carrying the uplink data does not overlap with the SR with the priority different from the uplink data, the MAC entity considers that the uplink data is prioritized uplink data.

Optionally, the MAC entity transfers or transmits the uplink data and/or the first uplink grant to a PHY layer. The PHY layer transmits the first data to the network device after receiving the uplink data and/or the first uplink grant.

As an example rather than restriction, the uplink data is an MAC PDU, a PUSCH, or a UL-SCH.

As an example rather than restriction, the first resource is a PUSCH resource or a UL-SCH resource.

As an example rather than restriction, the second resource is a PUCCH resource.

Optionally, the priority of the uplink grant being different from the priority of the SR includes one or more of the following.

The priority of a PHY layer of the SR is higher than the priority of a PHY layer of the first uplink grant.

The priority of the PHY layer of the SR is different from the priority of the PHY layer of the first uplink grant.

The priority of the PHY layer of the SR is different from the priority of a PHY layer of the first resource.

The priority of a PHY layer of the second resource is different from the priority of the PHY layer of the first resource.

The priority of the PHY layer of the SR is higher than the priority of the PHY layer of the first resource.

The priority of the PHY layer of the second resource is higher than the priority of the PHY layer of the first resource.

That is to say, the MAC entity considers the priority of the PHY layer, compares the SR with the first uplink grant, or the first resource with the second resource. In a case where it is determined that the second resource used for carrying the SR satisfying one or more of the abovementioned conditions does not overlap with the first resource of the first uplink grant, the MAC entity considers that the first uplink grant is a prioritized first uplink grant, or considers that the uplink data is prioritized uplink data, or identifies the first uplink grant as prioritized, or identifies the uplink data as prioritized.

Optionally, the priority of the first uplink grant being different from the priority of the SR further includes one or more of the following.

The priority of an LCH of the SR is higher than the priority of the first uplink grant.

The priority of the LCH of the SR is higher than the priority of an LCH of the first uplink grant.

The priority of the LCH of the SR is higher than the priority of the first uplink grant.

The priority of the LCH of the SR is higher than the priority of the LCH of the first uplink grant;

The priority of the LCH triggering the SR is higher than the priority of the LCH of the first uplink grant.

The priority of the LCH triggering the uplink SR is higher than the priority of the first uplink grant.

That is to say, the MAC entity further compares the priority of the LCHs in addition to considering the priority of the PHY layer. The priority of the LCH of the SR and the priority of the first uplink grant may be compared with the priority of the LCH of the first uplink grant, or the priority of the LCH triggering the SR may be compared with the priority of the first uplink grant or the priority of the LCH triggering the SR, so as to consider that the first uplink grant is a prioritized first uplink grant, or consider that the uplink data is prioritized uplink data, or identify the first uplink grant as prioritized, or identify the uplink data as prioritized in a case where it is determined that the second resource used for carrying the SR satisfying one or more of the abovementioned conditions does not overlap with the first resource of the first uplink grant.

Optionally, the third condition further includes one or more of the following.

The MAC entity is configured with the priority of the LCH (for example, written as lch-basedProritizition).

The uplink data can be transmitted by the PHY layer or a lower layer of a MAC layer.

It is determined, according to the priority of the PHY layer, that the uplink data can be transmitted by the PHY layer or the lower layer of the MAC layer.

The SR cannot be transmitted by the PHY layer or the lower layer of the MAC layer.

For example, when the MAC is configured with the priority of the LCH, and the uplink data can be transmitted by the lower layer of the MAC layer, the MAC entity determines that if the first resource carrying the uplink data (such as a PUSCH resource or a UL-SCH resource) does not overlap the second resource carrying a specific SR (such as a PUCCH resource), where the specific SR refers to the priority of the LCH triggering the SR being higher than the priority of the first uplink grant, and the SR can be transmitted by a lower layer, then the MAC entity considers the first uplink grant as a prioritized uplink grant, or identifies the first uplink grant as prioritized.

Optionally, in a case where the third condition is satisfied, and the first resource does not overlap with the second resource, the MAC entity performs an operation of considering other (not satisfying the third condition) SR transmissions overlapping with the first uplink grant are de-prioritized SR transmissions, or the SR transmission with a resource overlapping with that of the first uplink grant being a de-prioritized SR transmission.

Exemplarily, the following related descriptions can be added to a communication standardization protocol.

"When the MAC entity is configured with Ich-basedPrioritization, for each uplink grant whose associated PUSCH can be transmitted by lower layers, the MAC entity shall:
1> if there is no overlapping PUCCH resource with an SR transmission which was not already de-prioritized, and the priority of the logical channel that triggered the SR is higher than the priority of the uplink grant, and the SR can be transmitted by lower layers:
2> consider this uplink grant as a prioritized uplink grant;
2> consider the other overlapping SR transmission(s), if any, as a de-prioritized SR transmission(s)."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

FIG. 4 illustrates another schematic flowchart of the communication method provided by the present disclosure.

It is to be noted that the method may be performed by a terminal device, and specifically, may be performed by a MAC of the terminal device, which is not limited thereto in the present disclosure.

At S410, a terminal device determines that a first resource overlaps with a second resource. The first resource is a DG resource, and the second resource is a CG resource.

The terminal device determines the first resource according to a UL DG, determines a second resource according to a UL CG, and determines that the first resource overlaps with the second resource.

At S420, in a case where the first condition or the second condition is satisfied, the terminal device transmits the DG, or the terminal device identifies the DG as prioritized.

The first condition includes determining that the DG resource can be transmitted according to the priority of the DG resource and/or the priority of the CG resource.

Further, the CG is identified as de-prioritized.

Optionally, the first condition further includes one or more of the following.

The priority of a PHY layer of the DG is the same as the priority of a PHY layer of the CG.

The CG cannot be transmitted by the PHY layer or a lower layer of a MAC layer.

According to the priority of the PHY layer, the CG cannot be transmitted by the PHY layer or the lower layer of the MAC layer.

For example, when the MAC entity of the terminal device determines that the first resource of the DG overlaps with the second resource of the CG, and the priority of the PHY layer of the DG is the same as the priority of the PHY layer of the CG, the MAC entity considers the DG as a prioritized uplink grant, or identifies the DG as prioritized, or considers that the priority of the DG is higher than the priority of the CG. Alternatively, the MAC entity considers that the first resource is a prioritized uplink grant, or identifies the first resource as prioritized, or considers that the priority of the resource is higher than the priority of the second resource, which is not limited thereto in the present disclosure.

For another example, when the MAC entity of the terminal device determines that the first resource of the DG overlaps with the second resource of the CG, and the CG cannot be transmitted by a lower layer of the MAC entity, then the MAC entity considers that the DG is a prioritized uplink grant, or identifies the DG as prioritized, or considers that the priority of the DG is higher than the priority of the CG. For another example, the MAC entity considers that the first resource is a prioritized uplink grant, or identifies the first resource as prioritized, or considers that the priority of the first resource is higher than the priority of the second resource.

The second condition includes determining that the DG resource can be transmitted according to the priority of the DG resource and/or the priority of the CG resource. Optionally, the second condition includes one or more of the following.

The priority of a PHY layer of the DG is different from the priority of a PHY layer of the CG.

The CG can be transmitted by the PHY layer or a lower layer of the MAC layer.

The DG can be transmitted by the PHY layer or the lower layer of the MAC layer.

According to the priority of the PHY layer, the DG can be transmitted by the PHY layer or the lower layer of the MAC layer.

According to the priority of the PHY layer, the CG can be transmitted by the PHY layer or the lower layer of the MAC layer.

The priority of the PHY layer of the DG is higher than the priority of the PHY layer of the CG.

The priority of the LCH of the DG is higher than the priority of the LCH of the CG.

For example, when the MAC entity of the terminal device determines that the first resource of the DG overlaps with the second resource of the CG, the priority of the PHY layer of the DG is different from the priority of the PHY layer of the CG, and the priority of the LCH of the DG is higher than the priority of the LCH of the CG, the MAC entity considers the DG as a prioritized uplink grant, or identifies the DG as prioritized, or considers that the priority of the DG is higher than the priority of the CG. Alternatively, the MAC entity considers that the first resource is a prioritized uplink grant, or identifies the first resource as prioritized, or considers that the priority of the resource is higher than the priority of the second resource, which is not limited thereto in the present disclosure.

For another example, when the MAC entity of the terminal device determines that the first resource of the DG overlaps with the second resource of the CG, and the CG cannot be transmitted by a lower layer of the MAC entity or can be transmitted by the lower layer of the MAC entity according to the priority of a PHY layer, then the MAC entity considers that the DG is a prioritized uplink grant, or identifies the DG as prioritized, or considers that the priority of the DG is higher than the priority of the CG. For another example, the MAC entity considers that the first resource is a prioritized uplink grant, or identifies the first resource as prioritized, or considers that the priority of the first resource is higher than the priority of the second resource.

Exemplarily, the following related descriptions can be added to a communication standardization protocol.

### "Condition1:

If there is overlapping PUSCH duration of a configured uplink grant which was not already de-prioritized, in the same BWP whose PHY priority is same as PHY priority of the uplink grant;
If there is overlapping PUSCH duration of a configured uplink grant which was not already de-prioritized, in the same BWP which can not be transmitted by lower layer.

### Condition2 :

The PHY priority of the configured uplink grant is different from the PHY priority of the uplink grant.

The configured uplink grant can be transmitted by lower layer.

When the MAC entity is configured with Ich-basedPrioritization, for each uplink grant whose associated PUSCH can be transmitted by lower layers, the MAC entity shall:
1> if this uplink grant is addressed to CS-RNTI with NDI = 1 or C-RNTI:
   2> if there is no overlapping PUSCH duration of a configured uplink grant which was not already de-prioritized, in the same BWP whose priority is higher than the priority of the uplink grant, and <Condition2 for CG and DG are with different PHY priority>; or < Condition1 for CG and DG are with same PHY priority >; and
   3> consider this uplink grant as a prioritized uplink grant;
   3> consider the other overlapping uplink grant(s), if any, as a de-prioritized uplink grant(s);
1> else if this uplink grant is a configured uplink grant:
   2> if there is no overlapping PUSCH duration of another configured uplink grant which was not already de-prioritized, in the same BWP, whose priority is higher than the priority of the uplink grant; and
   3> consider this uplink grant as a prioritized uplink grant;
   3> consider the other overlapping uplink grant(s), if any, as a de-prioritized uplink grant(s);"

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

FIG. 5 illustrates another schematic flowchart of the communication method provided by the present disclosure.

It is to be noted that the method may be performed by a terminal device, and specifically, may be performed by a MAC of the terminal device, but the present disclosure is not limited thereto.

At S510, a first terminal device receives first information from a network device. The first information is used for indicating a first time-frequency resource position, and the first time-frequency resource position is a preempted time-frequency resource position.

Optionally, the first information may be referred to as uplink Cancellation Information (CI) or UL CI.

The first condition includes the first terminal device being configured with the uplink CI. Optionally, the uplink CI is carried in an RRC message from the network device. The uplink CI is used for configuring the first terminal device to receive the first information. Alternatively, the first condition includes that the first terminal device receives uplink cancellation indication information. Further, the uplink cancellation indication may be included in Downlink Control Information (DCI).

At S520, in a case where the first resource overlaps with a time-frequency resource position, it is determined that the first resource is preempted, and the first resource is a resource carrying the uplink data.

The terminal device intends to transmit uplink data on the first resource, and determines that the first resource overlaps with the time-frequency resource position after receiving the first information, so as to determine that the first resource is preempted or discarded, or cannot be used for transmitting the uplink data. At S520, in a case where the first condition is satisfied, the first terminal device identifies the first resource as de-prioritized.

For example, the first terminal device is granted to transmit uplink data on the first resource, then a network device receives the first information, the first information indicating that the time-frequency resource position includes a resource that is occupied or preempted by other high-priority resource, and the time-frequency resource position overlaps with the first resource that needs to carry the uplink data, and then it is determined that first resource is discarded or preempted, or cannot be used for transmitting the uplink data. That is to say, the first information indicates that the first resource is discarded, the first resource is preempted, or the first resource cannot be used for transmitting the uplink data. In a case where the abovementioned first condition is satisfied, the first terminal considers that the first resource is a de-prioritized resource or identifies the first resource as de-prioritized, or considers that an uplink grant as a de-prioritized uplink grant or identifies the uplink grant as de-prioritized.

Optionally, the time-frequency resource position includes a second resource. The second resource is a resource used a second terminal device to transmit data. That is to say, the network device transmits the first information to notify the first terminal device because the second terminal device preempts the second resource. In a case where the first condition is satisfied, the first terminal device and/or the second terminal identifies the second resource as prioritized, or the terminal device determines that the priority of the second resource is higher than the priority of the first resource.

Exemplarily, the following related descriptions can be added to a communication standardization protocol.

"Note: The uplink grant is considered as a de-prioritized uplink grant if it is overlapped with the resource indicated by UL CI."

Optionally, the first condition further includes the priority of the first resource being first priority. The first priority is a priority in a priority set. The priority set at least includes the first priority and second priority. The first priority is lower than the second priority. Alternatively, the first condition includes that the first resource being configured or being indicated as de-prioritized. Optionally, the first priority is the priority of an LCH and/or the priority of a PHY layer.

Optionally, the first condition further includes that the terminal device is configured with the priority of the first information. For example, the network device configures the priority of the first information for the terminal device through uplinkCancellationPriority, or the uplinkCancellationPriority is enabled.

For example, in a case where the first terminal is configured with Cancellation information, the uplinkCancellationPriority is enabled, and the second resource used for transmitting the uplink data overlaps with the first resource indicated by UL CI and the second resource is the first priority (or de-prioritized), then it is considered that the uplink grant is a de-prioritized uplink grant, or it is considered that the second resource is a de-prioritized uplink resource.

Exemplarily, the following related descriptions can be added to a protocol.

"Note: The uplink grant is considered as a de-prioritized uplink grant if it is overlapped with the resource indicated by UL CI, and uplinkCancellationPriority is enabled, and the priority of the uplink grant is low."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

In addition, the following is another communication method provided by the embodiments not being part of the present disclosure, which will be described below in detail.

In a case where the terminal device performs replicated data transmission on more than two Radio Link Control (RLC) entities or more than two LCHs, or in a case where the duplicated data is transmitted in a Carrier Aggregation (CA) transmission mode in combination with a Dual Connectivity (DC) transmission mode, it is determined to use or not use an LCH mapping restriction on the LCHs or the RLC entities.

The LCH mapping restriction is used for restricting a carrier used when the LCHs transmit data.

Optionally, the more than two RLC entities are associated with one or more MAC entities, or more than two LCHs are associated with one or more MAC entities.

Optionally, the more than two RLC entities are associated with one Data Radio Bearer (DRB) or Signaling Radio Bearer (SRB).

Optionally, if one MAC entity is only associated with one LCH/if one MAC entity is associated with one LCH, and duplication transmission is deactivated or the duplication transmission corresponding to the MAC entity is deactivated, the LCH mapping restriction is maintained or used on the LCH associated with the MAC entity. And/or, if one MAC entity is only associated with one LCH/and if one MAC entity is associated with one LCH, and duplication transmission is activated or the duplication transmission corresponding to the MAC entity is activated, the LCH mapping restriction is maintained or used on the LCH associated with the MAC entity.

Optionally, if one MAC entity is associated with a plurality of LCHs, duplication transmission is deactivated or the duplication transmission corresponding to the MAC entity is deactivated, and there are a plurality of activated LCHs in the LCHs associated with the MAC entity, the LCH mapping restriction is maintained or used on the LCHs associated with the MAC entity. Alternatively, if one MAC entity is associated with a plurality of LCHs, and there are a plurality of activated LCHs in the LCHs associated with the MAC entity, the LCH mapping restriction is maintained or used on the LCHs associated with the MAC entity.

Optionally, if one MAC entity is associated with a plurality of LCHs, duplication transmission is deactivated or the duplication transmission corresponding to the MAC entity is deactivated, and there is only one activated LCH in the LCHs associated with the MAC entity, then the LCHs associated with the MAC entity do not use the LCH mapping restriction. Alternatively, if one MAC entity is associated with a plurality of LCHs, and if there is only one activated LCH in the LCHs associated with the MAC entity, then the LCHs associated with the MAC entity do not use the LCH mapping restriction.

Optionally, if one MAC entity is associated with a plurality of LCHs, duplication transmission is deactivated or the duplication transmission corresponding to the MAC entity is deactivated, and there is no activated LCH in the LCHs associated with the MAC entity, then the LCHs associated with the MAC entity do not use the LCH mapping restriction. Alternatively, if one MAC entity is associated with a plurality of LCHs, and there is no activated LCH in the LCHs associated with the MAC entity, then the LCHs associated with the MAC entity do not use the LCH mapping restriction.

Optionally, the abovementioned one MAC entity is any one MAC entity of one or more MAC entities associated with the abovementioned more than two LCHs.

Optionally, the terminal device receives first information from the network device. The first information is used for configuring the LCH mapping restriction, and the LCH mapping restriction is configured by taking an LCH as a unit or taking an RLC entity as a unit. Optionally, the first information may be referred to as serving cells allowed to be transmitted, which may be written as *allowedServingCells.*

Specifically, if one MAC entity is associated with a plurality of LCHs, in a case where duplication transmission is deactivated or the duplication transmission corresponding to the MAC entity is deactivated, and there are a plurality of activated LCHs in the activated associated with the MAC entity, the LCH mapping restriction is maintained or used on the LCHs (including activated LCHs and deactivated LCHs) associated with the MAC entity; or in a case where duplication transmission is deactivated or the duplication transmission corresponding to the MAC entity is deactivated, and there is only one or no activated LCH in the LCHs associated with the MAC entity, the LCH mapping restriction is not used on the LCH associated with the MAC entity.

Exemplarily, the following related descriptions can be added to a communication standardization protocol.

"When CA duplication is deactivated for a DRB, the logical channel mapping restrictions of the primary and secondary logical channels are lifted for as long as duplication remains deactivated. In DC+CA duplication, for the MAC entity associating with multiple LCHs, if there are more than one LCH being activated, the LCH mapping restriction for the LCHs is kept (including both LCH activated and deactived) as long as duplication associated with this MAC entity remains activated; otherwise, it is lifted as long as duplication associated with this MAC entity remains deactivated."

Exemplarily, the following related descriptions can be added to a communication standardization protocol.

"*allowedServingCells*, if configured, includes the Cell information associated to the UL grant. Does not apply to logical channels associated with a DRB configured with PDCP duplication within the same MAC entity (i.e. CA duplication) for which PDCP duplication is deactivated. Does not apply to logical channels associated with a MAC entity of a DRB configured with DC+CA PDCP duplication to which multiple logical channels are associated when PDCP duplication associated with the MAC entity is deactivated;" or

"*allowedServingCells*, if configured, includes the Cell information associated to the UL grant. Does not apply to logical channels associated with a DRB configured with PDCP duplication within the same MAC entity (i.e. CA duplication) for which PDCP duplication is deactivated. Does not apply to logical channels associated with a MAC entity of a DRB configured with DC+CA duplication when the MAC entity associates with multiple logical channels and no more than one logical channel of the MAC entity is activated; and"

According to the abovementioned solution, when the activation or deactivation of duplicate transmissions of more than two LCHs are different, the carrier that can be used for data transmission of LCHs corresponding to the bearer is specified, to ensure diversity gain or prevent inappropriate carriers from being used for the transmission of the data, thereby ensuring the reliability of data transmission.

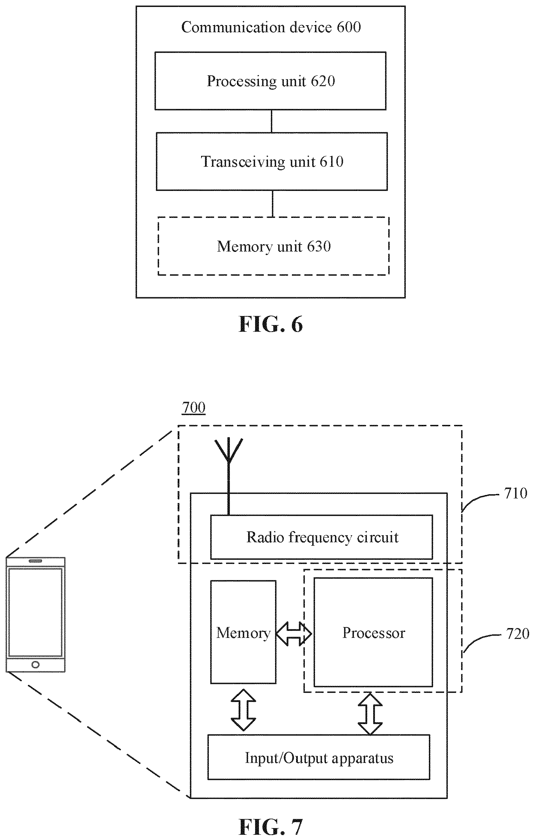

The method provided by the embodiments of the present disclosure is described above in detail with reference to FIG. 2 to FIG. 5. The device provided by the embodiments of the present disclosure is described below in detail with reference to FIG. 6 to FIG. 8.

FIG. 6 illustrates a schematic block diagram of a communication device provided by an embodiment of the present disclosure. As illustrated in FIG. 6, the communication device 600 may include a processing unit 610 and a transceiving unit 620.

In a possible design, the communication device 600 may correspond to the terminal device in the method embodiments above, or may be a chip configured (or used) in the terminal device.

It is to be understood that the communication device 600 may correspond to the terminal devices in the methods 200, 300, 400, and 500 according to the embodiments of the present disclosure. The communication device 600 may include units for performing the methods performed by the terminal devices in the methods 200, 300, 400, and 500 in FIG. 2, FIG. 3, FIG. 4, and FIG. 5. Moreover, various units in the communication device 600 and other operations and/or functions mentioned above are separately for implementing a corresponding process in the method 200 in FIG. 2.

It is also to be understood that, when the communication device 600 is configured (or used) in a chip in the terminal device, the transceiving unit 620 in the communication device 600 may be an input/output interface or circuit of the chip. The processing unit 610 in the communication device 600 may be a processor in the chip.

Optionally, the communication device 600 may further include a processing unit 610. The processing unit 610 may be configured to process instructions or data to realize corresponding operations.

Optionally, the communication device 600 may further include a storage unit 630. The storage unit 630 may be configured to store instructions or data. The processing unit 610 may execute the instructions or data stored in the storage unit, so that the communication device realizes corresponding operations. The transceiving unit 620 in the communication device 600 may be a transceiver 710 in the terminal device 700 as illustrated in FIG. 7. The storage unit 630 may correspond to a memory in the terminal device 700 as illustrated in FIG. 7.

It is to be understood that a specific process that various units execute the abovementioned corresponding steps has been described in detail in the abovementioned method embodiments, which will not be elaborated wherein for simplicity.

It is also to be understood that when the communication device 600 is a terminal device, the transceiving unit 620 in the communication device 600 may be implemented through a communication interface (such as a transceiver or an input/output interface), for example, may correspond to a transceiver 710 in the terminal device 700 as illustrated in FIG. 7. The processing unit 610 in the communication device 600 may be implemented through at least one processor, for example, may correspond to the processor 720 in the terminal device 700 as illustrated in FIG. 7. The processing unit 610 in the communication device 600 may be implemented through at least one logical circuit.

In another possible design, the communication device 600 may correspond to a network device in the above method embodiments, for example, or may be a chip configured (or used) in a network device.

It is to be understood that the communication device 600 may correspond to the network devices in the methods 200, 300, 400, and 500 according to the embodiments of the present disclosure. The communication device 600 may include units for performing the methods performed by the network devices in the methods 200, 300, 400, and 500 in FIG. 2, FIG. 3, FIG. 4, and FIG. 5. Moreover, various units in the communication device 600 and other operations and/or functions mentioned above are separately for implementing corresponding processes in the methods 200, 300, 400, and 500 in FIG. 2, FIG. 3, FIG. 4, and FIG. 5.

It is also to be understood that, when the communication device 600 is a chip configured (or used) in the network device, the transceiving unit in the communication device 600 may be an input/output interface or circuit in the chip. The processing unit 610 in the communication device 600 may be a processor in the chip.

Optionally, the communication device 600 may further include a processing unit 610. The processing unit 610 may be configured to process instructions or data to realize corresponding operations.

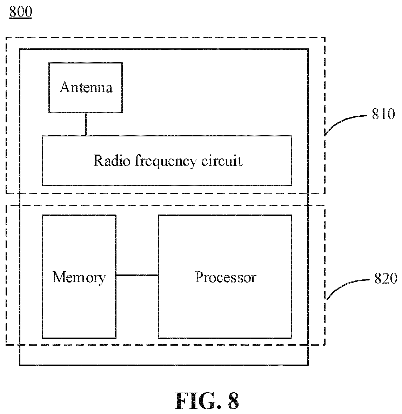

Optionally, the communication device 600 may further include a storage unit 630. The storage unit may be configured to store instructions or data. The processing unit may execute the instructions or data stored in the storage unit 630, so that the communication device implements corresponding operations. The storage unit 630 in the communication device 600 may correspond to a memory in the network device 800 as illustrated in FIG. 8.

It is to be understood that a specific process that various units execute the abovementioned corresponding steps has been described in detail in the abovementioned method embodiments, which will not be elaborated wherein for simplicity.

It is also to be understood that when the communication device 600 is a network device, the transceiving unit 620 in the communication device 600 may be implemented through a communication interface (such as a transceiver or an input/output interface), for example, may correspond to a transceiver 810 in the network device 800 as illustrated in FIG. 8. The processing unit 610 in the communication device 600 may be implemented through at least one processor, for example, may correspond to the processor 820 in the network device 800 as illustrated in FIG. 8. The processing unit 610 in the communication device 600 may be implemented through at least one logical circuit.

FIG. 7 illustrates a schematic structural diagram of the terminal device 600 provided by the embodiments of the present disclosure. The terminal device 700 may be applied to a system as illustrated in FIG. 1 to execute the functions of the terminal device in the abovementioned method embodiments. As illustrated in the figure, the terminal device 700 includes a processor 720 and a transceiver 710. Optionally, the terminal device 700 may further include a memory. The processor 720, the transceiver 710, and the memory communicate with each other by using an internal connection channel, so as to transmit control and/or data signals. The memory is configured to store a computer program. The processor 720 is configured to execute the computer program in the memory, so as to control the transceiver 710 to transmit and/or receive signals.

The abovementioned processor 720 and the memory may be combined into a processing device. The processor 720 is configured to execute a program code stored in the memory to realize the abovementioned functions. In specific implementation, the memory may also be integrated in the processor 720, or may be independent of the processor 720. The processor 720 may correspond to the processing unit in FIG. 6.

The abovementioned transceiver 710 may correspond to the transceiving unit in FIG. 6. The transceiver 710 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It is to be understood that the terminal device 700 illustrated in FIG. 7 can implement various processes of the terminal device involved in the embodiments of the methods 200, 300, 400, and 500 in FIG. 2, FIG. 3, FIG. 4, and FIG. 5. Operations and/or functions of various modules in the terminal device 700 are intended to respectively implement corresponding processes in the abovementioned method embodiments. Specific reference may be made to the description in the abovementioned method embodiments. To avoid repetition, detailed descriptions are omitted herein as appropriate.

The abovementioned processor 720 may be configured to perform the actions internally implemented by the terminal device described in the previous method embodiments, while the transceiver 710 may be configured to perform the actions that the terminal device described in the previous method embodiment transmits to the network device or receives from the network device. Reference is made to the description in the previous method embodiments for details, which will not be elaborated herein.

Optionally, the abovementioned terminal device 700 may further include a power supply, which is configured to supply power for various devices or circuits in the terminal device.

In addition, in order to made the functions of the terminal device more perfect, the terminal device 700 may further include one or more of an input unit, a display unit, an audio circuit, a camera, a sensor, etc. The audio circuit may also include a speaker, a microphone, etc.

FIG. 8 illustrates a schematic structural diagram of the network device provided by the embodiments not being part of the present disclosure. The network device 800 may be applied to a system as illustrated in FIG. 1 to execute the functions of the network device in the abovementioned method embodiments. For example, FIG. 8 may be a schematic diagram of related structures of the network device.

It is to be understood that the network device 800 as illustrated in FIG. 8 can implement various processes involving the network device in the methods 200, 300, 400, and 500 in FIG. 2, FIG. 3, FIG. 4, and FIG. 5. Operations and/or functions of various modules in the network device 800 are intended to respectively implement corresponding processes in the abovementioned method embodiments. Specific reference may be made to the description in the abovementioned method embodiments. To avoid repetition, detailed descriptions are omitted herein as appropriate.

It is to be understood that the network device 800 as illustrated in FIG. 8 is only possible architecture of the network device, and does not constitute any limitation to the present disclosure. The method provided by the present disclosure is applicable to the network devices of other architectures. For example, the method is applicable to the network devices, including CU, DU, and AAU, and the like. No limits are made to specific architecture of the network device in the present disclosure.

An embodiment of the present disclosure further provides a processing device, including a processor and an interface. The processor is configured to perform the method in any one of the abovementioned method embodiments.

It is to be understood that the abovementioned processing device may be one or more chips. For example, the processing device may be a Field Programmable Gate Array (FPGA), an Application Specific Integrated Circuit (ASIC), a System on Chip (SoC), a Central Processor Unit (CPU), or a Network Processor (NP), a Digital Signal Processor (DSP), a Micro Controller Unit (MCU), a Programmable Logic Device (PLD) or other integrated chips.

During implementation, various steps of the abovementioned method may be completed by an integrated logical circuit of hardware in the processor or an instruction in the form of software. The steps of the method disclosed with reference to the embodiments of the present disclosure may be directly performed and completed by a hardware processor, or may be performed and completed by using a combination of hardware in the processor and a software module. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor. To avoid repetition, details are not described in detail herein.

It is to be noted that the processor in the embodiments of the present disclosure may be an integrated circuit chip with signal processing capacity. In an implementation process, various steps of the abovementioned method embodiments may be completed by an integrated logic circuit of hardware in the processor or an instruction in the form of software. The abovementioned processor may be a general-purpose processor, a Digital Signal Processor (DSP), an ASIC, an FPGA or other programmable logic devices, a discrete gate, or a transistor logic device, or a discrete hardware component. Various methods, steps, and logical block diagrams of the disclosure in the embodiments of the present disclosure may be implemented or performed. The general-purpose processor may be a microprocessor, any conventional processor, or the like. Steps of the methods disclosed with reference to the embodiments of the present disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the present disclosure may be a volatile memory or a nonvolatile memory, or may include a volatile memory and a nonvolatile memory. The nonvolatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described in this specification includes but is not limited to these and any other proper types of memories.

According to the method provided by the embodiments of the present disclosure, the present disclosure further provide a computer program product. The computer program product includes a computer program code. When the computer program code is run by one or more processors, an device including the processor performs the method in the abovementioned embodiments.

According to the method provided by the embodiments of the present disclosure, the present disclosure further provides a computer-readable storage medium. The computer-readable storage medium stores a program code. When the program code is run by one or more processors, an device including the processor performs the method in the abovementioned embodiments.

According to the method provided by the embodiments of the present disclosure, the present disclosure further provides a system, which includes the foregoing one or more network devices. The system may further include the foregoing one or more terminal devices.

In several embodiments provided by the present disclosure, it is to be understood that the disclosed device and method may be implemented in other manners. For example, the device embodiments described above are merely exemplary. For example, the module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electrical, mechanical, or other forms.

In specific implementation of the abovementioned terminal device and network device, it is to be understood that the processor may be CPU, or other general-purpose processors, DSP, ASIC, etc. The general-purpose processor may be a microprocessor, or the processor may also be any conventional processor or the like. The steps of the method disclosed with reference to the present disclosure may be directly performed and completed by a hardware processor, or may be performed and completed by using a combination of hardware in the processor and a software module.

All or part of the steps for implementing various method embodiments mentioned above may be completed by hardware relevant to a program instruction. The foregoing program may be stored in a readable memory. When the program is executed, the steps including various method embodiments mentioned above are performed. The foregoing memory (storage medium) includes: a ROM, a RAM, a hard disk, a solid state disk, a magnetic tape, a floppy disk, an optical disk, and any combination thereof.

The above is only a specific implementation mode of the disclosure and not intended to limit the scope of protection of the disclosure. Therefore, the scope of protection of the disclosure shall be subject to the scope of protection of the claim.

## Claims

1. A communication method, comprising:
determining by a terminal device (S210) that a first resource overlaps with a second resource, wherein the first resource is used for carrying an uplink Scheduling Request, SR, and the second resource is used for carrying uplink data; and
in a case where a first condition is satisfied, transmitting by the terminal device (S220) the uplink SR,
wherein the first condition comprises a priority of the uplink SR being different from a priority of a first uplink grant and the first uplink grant being used for transmitting the uplink data,
**characterized in that** transmitting by the terminal device (S220) the uplink SR information comprises
in a case where a second condition is satisfied, transmitting the uplink SR, or identifying the uplink SR as a prioritized uplink SR,
wherein the second condition comprises at least one of the following:
an Media Access Control, MAC, entity of the terminal device being configured with a priority of an Logical Channel, LCH; or
the first resource not overlapping with a resource granted by a second uplink grant.

2. The method of claim 1, wherein the priority of the uplink SR being different from the priority of the first uplink grant comprises:
a priority of a LCH triggering the uplink SR being higher than the priority of the first uplink grant;
wherein the first condition further comprises:
the uplink SR being transmittable by a Physical, PHY, layer or a lower layer of a MAC layer.

3. The method of claim 1 or 2, further comprising:
in a case where a priority of a PHY layer of the uplink SR is same as a priority of a PHY layer of the first uplink grant, identifying the uplink SR as a de-prioritized uplink SR, or determining that the priority of the uplink SR is lower than the priority of the uplink grant; or
in a case where a priority of a PHY layer of the first resource is same as a priority of a PHY layer of the first uplink grant, identifying the uplink SR as a de-prioritized uplink SR, or determining that the priority of the uplink SR is lower than the priority of the uplink grant; or
in a case where the priority of the PHY layer of the uplink SR is same as the priority of the PHY layer of the first uplink grant, identifying the first uplink grant as a prioritized uplink grant, or identifying the second resource as a prioritized resource; or
in a case where the priority of the PHY layer of the first resource is same as the priority of the PHY layer of the first uplink grant, identifying the first uplink grant as a prioritized uplink grant, or identifying the second resource as a prioritized resource.

4. The method of claim 1 or 2, further comprising:
in a case where a priority of a PHY layer of the uplink SR is different from a priority of a PHY layer of the first uplink grant, comparing the priority of an LCH of the SR and the priority of the first uplink grant to determine whether to transmit the SR to the PHY layer, wherein
in a case where the priority of the LCH of the SR is higher than the priority of the first uplink grant, a SR transmission is considered as a prioritized SR transmission or the SR transmission is identified as prioritized, and the SR is transmitted to the PHY layer, or
in a case where the priority of the LCH of the SR is lower than or equal to the priority of the first uplink grant, the SR transmission is considered as a de-prioritized SR transmission or the SR transmission is identified as de-prioritized, and the first uplink grant is considered as a prioritized uplink grant or the first uplink grant is identified as prioritized, and the uplink data is transmitted to the PHY layer.

5. The method of any one of claims 2 to 4, further comprising:
receiving first information and second information from a network device, the first information being used for configuring a priority of a PHY layer of the first uplink SR or a priority of the PHY layer of the first resource, and the second information being used for configuring the priority of the PHY layer of the first uplink grant.

6. The method of any one of claims 1-5, wherein the second resource is a Physical Uplink Shared Channel, PUSCH, resource.

7. The method of any one of claims 1-6, wherein the method is performed by a MAC entity of the terminal device.

8. A communication method, comprising:
granting, by a network device, a terminal device to transmit uplink data on a second resource, wherein a first resource overlaps with the second resource, and the first resource is used for carrying an uplink Scheduling Request, SR; and
in a case where a first condition is satisfied, receiving, by the network device, the uplink SR from the terminal device,
wherein the first condition comprises a priority of the uplink SR being different from a priority of a first uplink grant and the first uplink grant being used for transmitting the uplink data,
**characterized in that** in a case where a second condition is satisfied, the uplink SR is received, or the uplink SR is identified as a prioritized uplink SR,
wherein the second condition comprises at least one of the following:
an Media Access Control, MAC, entity of the terminal device being configured with a priority of an Logical Channel, LCH; or
the first resource not overlapping with a resource granted by a second uplink grant.

9. The method of claim 8, wherein the priority of the uplink SR being different from the priority of the first uplink grant comprises:
a priority of a LCH triggering the uplink SR being higher than the priority of the first uplink grant;
wherein the first condition further comprises:
the uplink SR being transmittable by a Physical, PHY, layer or a lower layer of a MAC layer.

10. The method of claim 8 or 9, wherein,
in a case where a priority of a PHY layer of the uplink SR is same as a priority of a PHY layer of the first uplink grant, the uplink SR is identified as a de-prioritized uplink SR, or the priority of the uplink SR is determined to be lower than the priority of the uplink grant; or
in a case where a priority of a PHY layer of the first resource is same as a priority of a PHY layer of the first uplink grant, the uplink SR is identified as a de-prioritized uplink SR, or the priority of the uplink SR is determined to be lower than the priority of the uplink grant; or
in a case where the priority of the PHY layer of the uplink SR is same as the priority of the PHY layer of the first uplink grant, the first uplink grant is identified as a prioritized uplink grant, or the second resource is identified as a prioritized resource; or
in a case where the priority of the PHY layer of the first resource is same as the priority of the PHY layer of the first uplink grant, the first uplink grant is identified as a prioritized uplink grant, or the second resource is identified as a prioritized resource.

11. The method of claim 9 or 10, further comprising:
transmitting, by the network device, first information and second information to the terminal device, the first information being used for configuring a priority of a PHY layer of the first uplink SR or a priority of the PHY layer of the first resource, and the second information being used for configuring the priority of the PHY layer of the first uplink grant.

12. A terminal device, comprising:
a processing unit (610), configured to determine that a first resource overlaps with a second resource, the first resource being used for carrying an uplink Scheduling Request, SR, and the second resource being used for carrying uplink data; and
a transceiving unit (620), configured to transmit the uplink SR in a case where a first condition is satisfied,
wherein the first condition comprises a priority of the uplink SR being different from a priority of a first uplink grant and the first uplink grant being used for transmitting the uplink data,
**characterized in that** the processing unit (610) is specifically configured to: in a case where a second condition is satisfied, transmit the uplink SR, or identify the uplink SR as a prioritized uplink SR,
wherein the second condition comprises at least one of the following:
an Media Access Control, MAC, entity of the terminal device being configured with a priority of an Logical Channel, LCH; or
the first resource not overlapping with a resource granted by a second uplink grant.

13. The terminal device of claim 12, wherein the priority of the uplink SR being different from the priority of the first uplink grant comprises:
a priority of a LCH triggering the uplink SR being higher than the priority of the first uplink grant;
wherein the first condition further comprises:
the uplink SR being transmittable by a Physical, PHY, layer or a lower layer of a MAC layer.

14. The terminal device of claim 12 or 13, wherein the processing unit (610) is further configured to compare the priority of an LCH of the SR and the priority of the first uplink grant to determine whether to transmit the SR to the PHY layer in a case where a priority of a PHY layer of the uplink SR is different from a priority of a PHY layer of the first uplink grant, wherein
in a case where the priority of the LCH of the SR is higher than the priority of the first uplink grant, a SR transmission is considered as a prioritized SR transmission or the SR transmission is identified as prioritized, and the SR is transmitted to the PHY layer, or
in a case where the priority of the LCH of the SR is lower than or equal to the priority of the first uplink grant, the SR transmission is considered as a de-prioritized SR transmission or the SR transmission is identified as de-prioritized, and the first uplink grant is considered as a prioritized uplink grant or the first uplink grant is identified as prioritized, and the uplink data is transmitted to the PHY layer.

15. A network device comprising a processor and a memory, wherein the memory is configured to store computer programs, and the processor is configured to invoke and run the computer programs stored in the memory to perform the method of any one of claims 8 to 11.

## Patentansprüche

1. Kommunikationsverfahren, umfassend:
Bestimmen, durch eine Endgerätevorrichtung, (S210), dass eine erste Ressource eine zweite Ressource überlappt, wobei die erste Ressource zum Führen einer Uplink-Scheduling-Anforderung, Uplink-SR, verwendet wird und die zweite Ressource zum Führen von Uplink-Daten verwendet wird; und
falls eine erste Bedingung erfüllt ist, Übertragen, durch die Endgerätevorrichtung, (S220), der Uplink-SR,
wobei die erste Bedingung umfasst, dass sich eine Priorität der Uplink-SR von einer Priorität einer ersten Uplink-Gewährung unterscheidet und die erste Uplink-Gewährung zum Übertragen der Uplink-Daten verwendet wird,
**dadurch gekennzeichnet, dass** das Übertragen, durch die Endgerätevorrichtung, (S220) der Uplink-SR-Informationen umfasst:
falls eine zweite Bedingung erfüllt ist, Übertragen der Uplink-SR oder Identifizieren der Uplink-SR als eine priorisierte Uplink-SR,
wobei die zweite Bedingung mindestens eines des Folgenden umfasst:
eine Medienzugangssteuerung- bzw. MAC-Entität der Endgerätevorrichtung ist mit einer Priorität eines Logikkanals, LCH, konfiguriert; oder
die erste Ressource überlappt keine Ressource, die durch eine zweite Uplink-Gewährung gewährt wird.

2. Verfahren nach Anspruch 1, wobei, dass sich die Priorität der Uplink-SR von der Priorität der ersten Uplink-Gewährung unterscheidet, umfasst:
eine Priorität eines LCH, der die Uplink-SR auslöst, ist höher als die Priorität der ersten Uplink-Gewährung;
wobei die erste Bedingung ferner umfasst:
die Uplink-SR ist durch eine Bitübertragungs- bzw. PHY-Schicht oder eine untere Schicht einer MAC-Schicht übertragbar.

3. Verfahren nach Anspruch 1 oder 2, ferner umfassend:
falls eine Priorität einer PHY-Schicht der Uplink-SR die gleiche wie eine Priorität einer PHY-Schicht der ersten Uplink-Gewährung ist, Identifizieren der Uplink-SR als eine depriorisierte Uplink-SR oder Bestimmen, dass die Priorität der Uplink-SR niedriger als die Priorität der Uplink-Gewährung ist; oder
falls eine Priorität einer PHY-Schicht der ersten Ressource die gleiche wie eine Priorität einer PHY-Schicht der ersten Uplink-Gewährung ist, Identifizieren der Uplink-SR als eine depriorisierte Uplink-SR oder Bestimmen, dass die Priorität der Uplink-SR niedriger als die Priorität der Uplink-Gewährung ist; oder
falls die Priorität der PHY-Schicht der Uplink-SR die gleiche wie die Priorität der PHY-Schicht der ersten Uplink-Gewährung ist, Identifizieren der ersten Uplink-Gewährung als eine priorisierte Uplink-Gewährung oder Identifizieren der zweiten Ressource als eine priorisierte Ressource; oder
falls die Priorität der PHY-Schicht der ersten Ressource die gleiche wie die Priorität der PHY-Schicht der ersten Uplink-Gewährung ist, Identifizieren der ersten Uplink-Gewährung als eine priorisierte Uplink-Gewährung oder Identifizieren der zweiten Ressource als eine priorisierte Ressource.

4. Verfahren nach Anspruch 1 oder 2, ferner umfassend:
falls sich eine Priorität einer PHY-Schicht der Uplink-SR von einer Priorität einer PHY-Schicht der ersten Uplink-Gewährung unterscheidet, Vergleichen der Priorität eines LCH der SR und der Priorität der ersten Uplink-Gewährung,
um zu bestimmen, ob die SR an die PHY-Schicht zu übertragen ist, wobei falls die Priorität des LCH der SR höher als die Priorität der ersten Uplink-Gewährung ist, eine SR-Übertragung als eine priorisierte SR-Übertragung angesehen wird oder die SR-Übertragung als priorisiert identifiziert wird, und
die SR an die PHY-Schicht übertragen wird, oder
falls die Priorität des LCH der SR niedriger oder gleich der Priorität der ersten Uplink-Gewährung ist, die SR-Übertragung als eine depriorisierte SR-Übertragung angesehen wird oder die SR-Übertragung als depriorisiert identifiziert wird, und die erste Uplink-Gewährung als eine priorisierte Uplink-Gewährung angesehen wird oder die erste Uplink-Gewährung als priorisiert identifiziert wird, und die Uplink-Daten an die PHY-Schicht übertragen werden.

5. Verfahren nach einem der Ansprüche 2 bis 4, ferner umfassend:
Empfangen erster Informationen und zweiter Informationen von einer Netzvorrichtung, wobei die ersten Informationen zum Konfigurieren einer Priorität einer PHY-Schicht der ersten Uplink-SR oder einer Priorität der PHY-Schicht der ersten Ressource verwendet werden und die zweiten Informationen zum Konfigurieren der Priorität der PHY-Schicht der ersten Uplink-Gewährung verwendet werden.

6. Verfahren nach einem der Ansprüche 1-5, wobei die zweite Ressource eine Ressource eines physischen gemeinsam genutzten Uplink-Kanals, PUSCH, ist.

7. Verfahren nach einem der Ansprüche 1-6, wobei das Verfahren durch eine MAC-Entität der Endgerätevorrichtung durchgeführt wird.

8. Kommunikationsverfahren, umfassend:
Gewähren, durch eine Netzvorrichtung, einer Endgerätevorrichtung, Uplink-Daten auf einer zweiten Ressource zu übertragen, wobei eine erste Ressource die zweite Ressource überlappt und die erste Ressource zum Führen einer Uplink-Scheduling-Anforderung, Uplink-SR, verwendet wird; und
falls eine erste Bedingung erfüllt ist, Empfangen, durch die Netzvorrichtung, der Uplink-SR von der Endgerätevorrichtung,
wobei die erste Bedingung umfasst, dass sich eine Priorität der Uplink-SR von einer Priorität einer ersten Uplink-Gewährung unterscheidet und die erste Uplink-Gewährung zum Übertragen der Uplink-Daten verwendet wird,
**dadurch gekennzeichnet, dass**, falls eine zweite Bedingung erfüllt ist, die Uplink-SR empfangen wird oder die Uplink-SR als eine priorisierte Uplink-SR identifiziert wird,
wobei die zweite Bedingung mindestens eines des Folgenden umfasst:
eine Medienzugangssteuerung- bzw. MAC-Entität der Endgerätevorrichtung ist mit einer Priorität eines Logikkanals, LCH, konfiguriert; oder
die erste Ressource überlappt keine Ressource, die durch eine zweite Uplink-Gewährung gewährt wird.

9. Verfahren nach Anspruch 8, wobei, dass sich die Priorität der Uplink-SR von der Priorität der ersten Uplink-Gewährung unterscheidet, umfasst:
eine Priorität eines LCH, der die Uplink-SR auslöst, ist höher als die Priorität der ersten Uplink-Gewährung;
wobei die erste Bedingung ferner umfasst:
die Uplink-SR ist durch eine Bitübertragungs- bzw. PHY-Schicht oder eine untere Schicht einer MAC-Schicht übertragbar.

10. Verfahren nach Anspruch 8 oder 9, wobei
falls eine Priorität einer PHY-Schicht der Uplink-SR die gleiche wie eine Priorität einer PHY-Schicht der ersten Uplink-Gewährung ist, die Uplink-SR als eine depriorisierte Uplink-SR identifiziert wird oder bestimmt wird, dass die Priorität der Uplink-SR niedriger als die Priorität der Uplink-Gewährung ist; oder
falls eine Priorität einer PHY-Schicht der ersten Ressource die gleiche wie eine Priorität einer PHY-Schicht der ersten Uplink-Gewährung ist, die Uplink-SR als eine depriorisierte Uplink-SR identifiziert wird oder bestimmt wird, dass die Priorität der Uplink-SR niedriger als die Priorität der Uplink-Gewährung ist; oder
falls die Priorität der PHY-Schicht der Uplink-SR die gleiche wie die Priorität der PHY-Schicht der ersten Uplink-Gewährung ist, die erste Uplink-Gewährung als eine priorisierte Uplink-Gewährung identifiziert wird oder die zweite Ressource als eine priorisierte Ressource identifiziert wird; oder
falls die Priorität der PHY-Schicht der ersten Ressource die gleiche wie die Priorität der PHY-Schicht der ersten Uplink-Gewährung ist, die erste Uplink-Gewährung als eine priorisierte Uplink-Gewährung identifiziert wird oder die zweite Ressource als eine priorisierte Ressource identifiziert wird.

11. Verfahren nach Anspruch 9 oder 10, ferner umfassend:
Übertragen, durch die Netzvorrichtung, erster Informationen und zweiter Informationen an die Endgerätevorrichtung, wobei die ersten Informationen zum Konfigurieren einer Priorität einer PHY-Schicht der ersten Uplink-SR oder einer Priorität der PHY-Schicht der ersten Ressource verwendet werden und die zweiten Informationen zum Konfigurieren der Priorität der PHY-Schicht der ersten Uplink-Gewährung verwendet werden.

12. Endgerätevorrichtung, umfassend:
eine Verarbeitungseinheit (610), die ausgelegt ist zum Bestimmen, dass eine erste Ressource eine zweite Ressource überlappt, wobei die erste Ressource zum Führen einer Uplink-Scheduling-Anforderung, Uplink-SR, verwendet wird und die zweite Ressource zum Führen von Uplink-Daten verwendet wird; und
eine Sendeempfangseinheit (620), die ausgelegt ist zum Übertragen der Uplink-SR, falls eine erste Bedingung erfüllt ist,
wobei die erste Bedingung umfasst, dass sich eine Priorität der Uplink-SR von einer Priorität einer ersten Uplink-Gewährung unterscheidet und die erste Uplink-Gewährung zum Übertragen der Uplink-Daten verwendet wird,
**dadurch gekennzeichnet, dass** die Verarbeitungseinheit (610) speziell ausgelegt ist zum: falls eine zweite Bedingung erfüllt ist, Übertragen der Uplink-SR oder Identifizieren der Uplink-SR als eine priorisierte Uplink-SR,
wobei die zweite Bedingung mindestens eines des Folgenden umfasst:
eine Medienzugangssteuerung- bzw. MAC-Entität der Endgerätevorrichtung ist mit einer Priorität eines Logikkanals, LCH, konfiguriert; oder
die erste Ressource überlappt keine Ressource, die durch eine zweite Uplink-Gewährung gewährt wird.

13. Endgerätevorrichtung nach Anspruch 12, wobei, dass sich die Priorität der Uplink-SR von der Priorität der ersten Uplink-Gewährung unterscheidet, umfasst:
eine Priorität eines LCH, der die Uplink-SR auslöst, ist höher als die Priorität der ersten Uplink-Gewährung;
wobei die erste Bedingung ferner umfasst:
die Uplink-SR ist durch eine Bitübertragungs- bzw. PHY-Schicht oder eine untere Schicht einer MAC-Schicht übertragbar.

14. Endgerätevorrichtung nach Anspruch 12 oder 13, wobei die Verarbeitungseinheit (610) ferner ausgelegt ist zum Vergleichen der Priorität eines LCH der SR und der Priorität der ersten Uplink-Gewährung, um zu bestimmen, ob die SR an die PHY-Schicht zu übertragen ist, falls sich eine Priorität einer PHY-Schicht der Uplink-SR von einer Priorität einer PHY-Schicht der ersten Uplink-Gewährung unterscheidet, wobei
falls die Priorität des LCH der SR höher als die Priorität der ersten Uplink-Gewährung ist, eine SR-Übertragung als eine priorisierte SR-Übertragung angesehen wird oder die SR-Übertragung als priorisiert identifiziert wird, und die SR an die PHY-Schicht übertragen wird, oder
falls die Priorität des LCH der SR niedriger oder gleich der Priorität der ersten Uplink-Gewährung ist, die SR-Übertragung als eine depriorisierte SR-Übertragung angesehen wird oder die SR-Übertragung als depriorisiert identifiziert wird, und die erste Uplink-Gewährung als eine priorisierte Uplink-Gewährung angesehen wird oder die erste Uplink-Gewährung als priorisiert identifiziert wird, und die Uplink-Daten an die PHY-Schicht übertragen werden.

15. Netzvorrichtung, die einen Prozessor und einen Speicher umfasst, wobei der Speicher ausgelegt ist zum Speichern von Computerprogrammen, und der Prozessor ausgelegt ist zum Aufrufen und Ausführen der im Speicher gespeicherten Computerprogramme, um das Verfahren nach einem der Ansprüche 8 bis 11 durchzuführen.

## Revendications

1. Procédé de communication, comportant :
la détermination (S210), par un dispositif terminal, du fait qu'une première ressource chevauche une seconde ressource, la première ressource étant utilisée pour transporter une demande de programmation, SR, de liaison montante et la seconde ressource étant utilisée pour transporter des données de liaison montante ; et
dans un cas où une première condition est satisfaite, l'émission (S220), par le dispositif terminal, de la SR de liaison montante,
la première condition comportant le fait qu'une priorité de la SR de liaison montante soit différente d'une priorité d'une première autorisation de liaison montante et que la première autorisation de liaison montante soit utilisée pour émettre les données de liaison montante,
**caractérisé en ce que** l'émission (S220), par le dispositif terminal, des informations de SR de liaison montante comporte :
dans un cas où une seconde condition est satisfaite, l'émission de la SR de liaison montante, ou l'identification de la SR de liaison montante en tant que SR de liaison montante prioritaire,
la seconde condition comportant au moins une des suivantes :
une entité de commande d'accès au support, MAC, du dispositif terminal est configurée avec une priorité d'un canal logique, LCH ; ou
la première ressource ne chevauche pas une ressource attribuée par une seconde autorisation de liaison montante.

2. Procédé selon la revendication 1, le fait que la priorité de la SR de liaison montante soit différente de la priorité de la première autorisation de liaison montante comportant :
le fait qu'une priorité d'un LCH déclenchant la SR de liaison montante soit supérieure à la priorité de la première autorisation de liaison montante ;
la première condition comportant en outre :
le fait que la SR de liaison montante puisse être transmise par une couche physique, PHY, ou une couche inférieure d'une couche MAC.

3. Procédé selon les revendications 1 ou 2, comportant en outre les étapes consistant :
dans un cas où une priorité d'une couche PHY de la SR de liaison montante est la même qu'une priorité d'une couche PHY de la première autorisation de liaison montante, à identifier la SR de liaison montante en tant que SR de liaison montante non prioritaire, ou à déterminer que la priorité de la SR de liaison montante est inférieure à la priorité de l'autorisation de liaison montante ; ou
dans un cas où une priorité d'une couche PHY de la première ressource est la même qu'une priorité d'une couche PHY de la première autorisation de liaison montante, à identifier la SR de liaison montante en tant que SR de liaison montante non prioritaire, ou à déterminer que la priorité de la SR de liaison montante est inférieure à la priorité de l'autorisation de liaison montante ; ou
dans un cas où la priorité de la couche PHY de la SR de liaison montante est la même que la priorité de la couche PHY de la première autorisation de liaison montante, à identifier la première autorisation de liaison montante en tant qu'autorisation prioritaire de liaison montante, ou à identifier la seconde ressource en tant que ressource prioritaire ; ou
dans un cas où la priorité de la couche PHY de la première ressource est la même que la priorité de la couche PHY de la première autorisation de liaison montante, à identifier la première autorisation de liaison montante en tant qu'autorisation prioritaire de liaison montante, ou à identifier la seconde ressource en tant que ressource prioritaire.

4. Procédé selon les revendications 1 ou 2, comportant en outre l'étape consistant :
dans un cas où une priorité d'une couche PHY de la SR de liaison montante est différente d'une priorité d'une couche PHY de la première autorisation de liaison montante, à comparer la priorité d'un LCH de la SR et la priorité de la première autorisation de liaison montante pour déterminer s'il convient de transmettre la SR à la couche PHY,
dans un cas où la priorité du LCH de la SR est supérieure à la priorité de la première autorisation de liaison montante, une transmission de SR étant considérée comme une transmission de SR prioritaire ou la transmission de SR étant identifiée comme prioritaire, et la SR étant transmise à la couche PHY, ou
dans un cas où la priorité du LCH de la SR est inférieure ou égale à la priorité de la première autorisation de liaison montante, la transmission de SR étant considérée comme une transmission de SR non prioritaire ou la transmission de SR étant identifiée comme non prioritaire, et la première autorisation de liaison montante étant considérée comme une autorisation prioritaire de liaison montante ou la première autorisation de liaison montante étant identifiée comme prioritaire, et les données de liaison montante étant transmises à la couche PHY.

5. Procédé selon l'une quelconque des revendications 2 à 4, comportant en outre :
la réception de premières informations et de secondes informations en provenance d'un dispositif de réseau, les premières informations étant utilisées pour configurer une priorité d'une couche PHY de la première SR de liaison montante ou une priorité de la couche PHY de la première ressource, et les secondes informations étant utilisées pour configurer la priorité de la couche PHY de la première autorisation de liaison montante.

6. Procédé selon l'une quelconque des revendications 1-5, la seconde ressource étant une ressource de canal physique partagé de liaison montante, PUSCH.

7. Procédé selon l'une quelconque des revendications 1-6, le procédé étant réalisé par une entité MAC du dispositif terminal.

8. Procédé de communication, comportant :
l'autorisation, par un dispositif de réseau, d'un dispositif terminal à émettre des données de liaison montante sur une seconde ressource, une première ressource chevauchant la seconde ressource, et la première ressource étant utilisée pour transporter une demande de programmation de liaison montante, SR ; et
dans un cas où une première condition est satisfaite, la réception, par le dispositif de réseau, de la SR de liaison montante en provenance du dispositif terminal,
la première condition comportant le fait qu'une priorité de la SR de liaison montante soit différente d'une priorité d'une première autorisation de liaison montante et que la première autorisation de liaison montante soit utilisée pour émettre les données de liaison montante,
**caractérisé en ce que** dans un cas où une seconde condition est satisfaite, la SR de liaison montante est reçue, ou la SR de liaison montante est identifiée en tant que SR de liaison montante prioritaire,
la seconde condition comportant au moins une des suivantes :
une entité de commande d'accès au support, MAC, du dispositif terminal est configurée avec une priorité d'un canal logique, LCH ; ou
la première ressource ne chevauche pas une ressource attribuée par une seconde autorisation de liaison montante.

9. Procédé selon la revendication 8, le fait que la priorité de la SR de liaison montante soit différente de la priorité de la première autorisation de liaison montante comportant :
le fait qu'une priorité d'un LCH déclenchant la SR de liaison montante soit supérieure à la priorité de la première autorisation de liaison montante ;
la première condition comportant en outre :
le fait que la SR de liaison montante puisse être transmise par une couche physique, PHY, ou une couche inférieure d'une couche MAC.

10. Procédé selon les revendications 8 ou 9,
dans un cas où une priorité d'une couche PHY de la SR de liaison montante est la même qu'une priorité d'une couche PHY de la première autorisation de liaison montante, la SR de liaison montante étant identifiée en tant que SR de liaison montante non prioritaire, ou la priorité de la SR de liaison montante étant déterminée comme inférieure à la priorité de l'autorisation de liaison montante ; ou
dans un cas où une priorité d'une couche PHY de la première ressource est la même qu'une priorité d'une couche PHY de la première autorisation de liaison montante, la SR de liaison montante étant identifiée en tant que SR de liaison montante non prioritaire, ou la priorité de la SR de liaison montante étant déterminée comme inférieure à la priorité de l'autorisation de liaison montante ; ou
dans un cas où la priorité de la couche PHY de la SR de liaison montante est la même que la priorité de la couche PHY de la première autorisation de liaison montante, la première autorisation de liaison montante étant identifiée en tant qu'autorisation prioritaire de liaison montante, ou la seconde ressource étant identifiée en tant que ressource prioritaire ; ou
dans un cas où la priorité de la couche PHY de la première ressource est la même que la priorité de la couche PHY de la première autorisation de liaison montante, la première autorisation de liaison montante étant identifiée en tant qu'autorisation prioritaire de liaison montante, ou la seconde ressource étant identifiée en tant que ressource prioritaire.

11. Procédé selon les revendications 9 ou 10, comportant en outre :
la transmission, par le dispositif de réseau, de premières informations et de secondes informations au dispositif terminal, les premières informations étant utilisées pour configurer une priorité d'une couche PHY de la première SR de liaison montante ou une priorité de la couche PHY de la première ressource, et les secondes informations étant utilisées pour configurer la priorité de la couche PHY de la première autorisation de liaison montante.

12. Dispositif terminal, comportant :
une unité (610) de traitement, configurée pour déterminer qu'une première ressource chevauche une seconde ressource, la première ressource étant utilisée pour transporter une demande de programmation, SR, de liaison montante et la seconde ressource étant utilisée pour transporter des données de liaison montante ; et
une unité (620) d'émission-réception, configurée pour émettre la SR de liaison montante dans un cas où une première condition est satisfaite,
la première condition comportant le fait qu'une priorité de la SR de liaison montante soit différente d'une priorité d'une première autorisation de liaison montante et que la première autorisation de liaison montante soit utilisée pour émettre les données de liaison montante,
**caractérisé en ce que** l'unité (610) de traitement est spécifiquement configurée pour : dans un cas où une seconde condition est satisfaite, émettre la SR de liaison montante, ou identifier la SR de liaison montante en tant que SR de liaison montante prioritaire,
la seconde condition comportant au moins une des suivantes :
une entité de commande d'accès au support, MAC, du dispositif terminal est configurée avec une priorité d'un canal logique, LCH ; ou
la première ressource ne chevauche pas une ressource attribuée par une seconde autorisation de liaison montante.

13. Dispositif terminal selon la revendication 12, le fait que la priorité de la SR de liaison montante soit différente de la priorité de la première autorisation de liaison montante comportant :
le fait qu'une priorité d'un LCH déclenchant la SR de liaison montante soit supérieure à la priorité de la première autorisation de liaison montante ;
la première condition comportant en outre :
le fait que la SR de liaison montante puisse être transmise par une couche physique, PHY, ou une couche inférieure d'une couche MAC.

14. Dispositif terminal selon la revendication 12 ou 13, l'unité (610) de traitement étant en outre configurée pour comparer la priorité d'un LCH de la SR et la priorité de la première autorisation de liaison montante pour déterminer s'il convient de transmettre la SR à la couche PHY dans un cas où une priorité d'une couche PHY de la SR de liaison montante est différente d'une priorité d'une couche PHY de la première autorisation de liaison montante,
dans un cas où la priorité du LCH de la SR est supérieure à la priorité de la première autorisation de liaison montante, une transmission de SR étant considérée comme une transmission de SR prioritaire ou la transmission de SR étant identifiée comme prioritaire, et la SR étant transmise à la couche PHY, ou
dans un cas où la priorité du LCH de la SR est inférieure ou égale à la priorité de la première autorisation de liaison montante, la transmission de SR étant considérée comme une transmission de SR non prioritaire ou la transmission de SR étant identifiée comme non prioritaire, et la première autorisation de liaison montante étant considérée comme une autorisation prioritaire de liaison montante ou la première autorisation de liaison montante étant identifiée comme prioritaire, et les données de liaison montante étant transmises à la couche PHY.

15. Dispositif de réseau comportant un processeur et une mémoire, la mémoire étant configurée pour stocker des programmes informatiques, et le processeur étant configuré pour invoquer et exécuter les programmes informatiques stockés dans la mémoire pour réaliser le procédé selon l'une quelconque des revendications 8 à 11.
